# EUROPEAN PATENT SPECIFICATION

(11) **EP 1 573 660 B1**
(45) Date of publication and mention of the grant of the patent: **08.08.2007**
(21) Application number: 03790448.9
(22) Date of filing: 11.12.2003
(51) Int. Cl.: G06K 9/62

(54) **IDENTIFYING CRITICAL FEATURES IN ORDERED SCALE SPACE**
IDENTIFIZIERUNG VON KRITISCHEN MERKMALEN IN EINEM GEORDNETEN SKALA-RAUM
IDENTIFICATION DE CARACTERISTIQUES ESSENTIELLES DANS UN ESPACE D'ECHELLE ORDONNE

(30) Priority: 11.12.2002 US 317438
(43) Date of publication of application: 14.09.2005
(73) Proprietor: Attenex Corporation, Seattle, WA 98104-1125 (US)
(72) Inventor: KNIGHT, William, Bainbridge Island, WA 98110 (US)
(74) Representative: Hanna, Peter William Derek
(86) International application number: PCT/US2003/039356
(87) International publication number: WO 2004/053771

(56) References cited:
- US-A- 6 070 133
- US-A1- 2002 016 798
- M. SLANEY, D. PONCELEON, J. KAUFMAN: "Multimedia Edges: Finding Hierarchy in all Dimensions" PROC. 9-TH ACM INTL. CONF. ON MULTIMEDIA, ISBN.1-58113-394-4, 30 September 2001 (2001-09-30), pages 29-40, XP002295016 OTTAWA
- KURIMO M: "Fast latent semantic indexing of spoken documents by using self-organizing maps" IEEE INTERNATIONAL CONFERENCE ON ACOUSTICS, SPEECH, AND SIGNAL PROCESSING, vol. 6, 5 June 2000 (2000-06-05), pages 2425-2428, XP010504794

## Description

### TECHNICAL FIELD

The present invention relates in general to feature recognition and categorization and, in particular, to a system and method for identifying critical features in an ordered scale space within a multi-dimensional feature space.

### BACKGROUND ART

Beginning with Gutenberg in the mid-fifteenth century, the volume of printed materials has steadily increased at an explosive pace. Today, the Library of Congress alone contains over 18 million books and 54 million manuscripts. A substantial body of printed material is also available in electronic form, in large part due to the widespread adoption of the Internet and personal computing.

Nevertheless, efficiently recognizing and categorizing notable features within a given body of printed documents remains a daunting and complex task, even when aided by automation. Efficient searching strategies have long existed for databases, spreadsheets and similar forms of ordered data. The majority of printed documents, however, are unstructured collections of individual words, which, at a semantic level, form terms and concepts, but generally lack a regular ordering or structure. Extracting or "mining" meaning from unstructured document sets consequently requires exploiting the inherent or "latent" semantic structure underlying sentences and words.

Recognizing and categorizing text within unstructured document sets presents problems analogous to other forms of data organization having latent meaning embedded in the natural ordering of individual features. For example, genome and protein sequences form patterns amenable to data mining methodologies and which can be readily parsed and analyzed to identify individual genetic characteristics. Each genome and protein sequence consists of a series of capital letters and numerals uniquely identifying a genetic code for DNA nucleotides and amino acids. Generic markers, that is, genes or other identifiable portions of DNA whose inheritance can be followed, occur naturally within a given genome or protein sequence and can help facilitate identification and categorization.

Efficiently processing a feature space composed of terms and concepts extracted from unstructured text or genetic markers extracted from genome and protein sequences both suffer from the curse of dimensionality: the dimensionality of the problem space grows proportionate to the size of the corpus of individual features. For example, terms and concepts can be mined from an unstructured document set and the frequencies of occurrence of individual terms and concepts can be readily determined. However, the frequency of occurrences increases linearly with each successive term and concept. The exponential growth of the problem space rapidly makes analysis intractable, even though much of the problem space is conceptually insignificant at a semantic level.

The high dimensionality of the problem space results from the rich feature space. The frequency of occurrences of each feature over the entire set of data (corpus for text documents) can be analyzed through statistical and similar means to determine a pattern of semantic regularity. However, the sheer number of features can unduly complicate identifying the most relevant features through redundant values and conceptually insignificant features.

Moreover, most popular classification techniques generally fail to operate in a high dimensional feature space. For instance, neural networks, Bayesian classifiers, and similar approaches work best when operating on a relatively small number of input values. These approaches fail when processing hundreds or thousands of input features. Neural networks, for example, include an input layer, one or more intermediate layers, and an output layer. With guided learning, the weights interconnecting these layers are modified by applying successive input sets and error propagation through the network. Retraining with a new set of inputs requires further training of this sort. A high dimensional feature space causes such retraining to be time consuming and infeasible.

Mapping a high-dimensional feature space to lower dimensions is also difficult. One approach to mapping is described in our U.S. patent application Serial No. 09/943,918, filed August 31, 2001. This approach utilizes statistical methods to enable a user to model and select relevant features, which are formed into clusters for display in a two-dimensional concept space. However, logically related concepts are not ordered and conceptually insignificant and redundant features within a concept space are retained in the lower dimensional projection.

A related approach to analyzing unstructured text is described in N.E. Miller at al, "Topic Islands: A Wavelet-Based Text Visualization System," IEEE Visualization Proc., 1998. The text visualization system automatically analyzes text to locate breaks in narrative flow. Wavelets are used to allow the narrative flow to be conceptualized in distinct channels. However, the channels do not describe individual features and do not digest an entire corpus of multiple documents.

Similarly, a variety of document warehousing and text mining techniques are described in D. Sullivan, "Document Warehousing and Text Mining-Techniques for Improving Business Operations, Marketing, and Sales," Parts 2 and 3, John Wiley & Sons (Feb 2001). However, the approaches are described without focus on identifying a feature space within a larger corpus or reordering high-dimensional feature vectors to extract latent semantic meaning.

U.S. Patent No. 6,070,133, Brewster et al., discloses an information retrieval system utilizing wavelet transform. The system performs spectral analysis on a waveform or digital signal for providing document characterization, where the digital signal is a numerical representation of the words contained within the document. Spectral analysis is performed to amplify the digital signal and reduce noise to allow a user to produce a visual representation of the semantic structure, which is the order in which the topics are discussed in the document narrative. The spectral analysis is provided by performing a wavelet transform on the digital signal and the output of the wavelet transform may be utilized to create a visual representation of the semantic structure, which may be a text-based, graphical, or combined representation. The output of the wavelet transform can also be utilized to partition the document according to semantic content at a single level or at multiple levels to produce an outline or "fuzzy" outline of the document. The numerical representation of the words within the document may be derived from word frequency counts, functions of word frequency counts, and statistical correlations of words within the entire document, or groups of words or subsets of words in a document. The digital signal retains the word order found in the narrative.

M. Slaney et al., "Multimedia Edges: Finding Hierarchy In All Dimensions," Proc. 9th ACM Intl. Conf. on Multimedia, p. 29-40 (September 30, 2001), discloses techniques to analyze the temporal properties of audio and image data in a video to create a hierarchical segmentation of the video, or a table of contents from the audio, semantic, and image data. Changes in the video or the semantic content of the video are detected as a function of time. Image data is analyzed through shot detection and combined with information from the audio signal to find changes in the content or tone that indicate higher level structures within the video. Techniques, such as Latent Semantic Indexing, are used to cluster related documents or find a document that most closely resembles a query, which can be used to describe the semantic path of a transcript of a video as a signal in a scale space. The signal can be analyzed to find semantic discontinuities in the audio and to create a semantic table of contents for the video. Any time point in the video can be described by position in an acoustic-color-semantic vector space.

U.S. Patent application, Publication No. US 2002/0016798, to Sakai et al. discloses a text information analysis apparatus and method that arranges a plurality of text according to content. A category position unit is configured to classify text into one of a plurality of predetermined categories. A cluster generation unit is configured to cluster texts having similar contents. A control unit is configured to control the category decision and cluster generation units to simultaneously execute category decision and clustering. A morphological analysis is executed for each text and any words included are identified prior to deciding whether the text is classified according to a category decision rule. However, the categories span a scalar space and fail to provide multiple levels of detail.

M. Kurimo, "Fast Latent Semantic Indexing Of Spoken Documents By Using Self-Organizing Maps," IEEE Int'1 Conf. on Acoustics, Speech, and Signal Proc., Vol. 5, pp. 2425-2428 (June 5, 2000), discloses a latent semantic indexing method for spoken audio documents. Documents are presented as vectors of word counts, whose dimensionality is rapidly reduced by a random mapping and which are projected into a latent semantic subspace. The vectors are smoothed by a self-organizing map, which provides an easy way to visualize index and query results and to explore the database. However, the self-organizing maps represent nonlinear high dimensionality data in a low dimensional display and fail to provide multiple levels of detail and features.

Therefore, there is a need for an approach to providing an ordered set of extracted features determined from a multi-dimensional problem space, including text documents and genome and protein sequences. Preferably, such an approach will isolate critical feature spaces while filtering out null valued, conceptually insignificant, and redundant features within the concept space.

There is a further need for an approach that transforms the feature space into an ordered scale space. Preferably, such an approach would provide a scalable feature space capable of abstraction in varying levels of detail through multiresolution analysis.

### DISCLOSURE OF INVENTION

The present invention provides a system and method in accordance with the claims which follow, for transforming a multi-dimensional feature space into an ordered and prioritized scale space representation. The scale space will generally be defined in Hilbert function space. A multiplicity of individual features are extracted from a plurality of discrete data collections. Each individual feature represents latent content inherent in the semantic structuring of the data collection. The features are organized into a set of patterns on a per data collection basis. Each pattern is analyzed for similarities and closely related features are grouped into individual clusters. In the described embodiment, the similarity measures are generated from a distance metric. The clusters are then projected into an ordered scale space where the individual feature vectors are subsequently encoded as wavelet and scaling coefficients using multiresolution analysis. The ordered vectors constitute a "semantic" signal amenable to signal processing techniques, such as compression.

An embodiment provides a system and method for identifying critical features in an ordered scale space within a multi-dimensional feature space. Features are extracted from a plurality of data collections. Each data collection is characterized by a collection of features semantically-related by a grammar. Each feature is then normalized and frequencies of occurrence and co-occurrences for the features for each of the data collections is determined. The occurrence frequencies and the co-occurrence frequencies for each of the extracted features are mapped into a set of patterns of occurrence frequencies and a set of patterns of co-occurrence frequencies. The pattern for each data collection is selected and similarity measures between each occurrence frequency in the selected pattern is calculated. The occurrence frequencies are projected onto a one-dimensional document signal in order of relative decreasing similarity using the similarity measures. Instances of high-dimensional feature vectors can then be treated as a one-dimensional signal vector. Wavelet and scaling coefficients are derived from the one-dimensional document signal.

A further embodiment provides a system and method for abstracting semantically latent concepts extracted from a plurality of documents. Terms and phrases are extracted from a plurality of documents. Each document includes a collection of terms, phrases and non-probative words. The terms and phrases are parsed into concepts and reduced into a single root word form. A frequency of occurrence is accumulated for each concept. The occurrence frequencies for each of the concepts are mapped into a set of patterns of occurrence frequencies, one such pattern per document, arranged in a two-dimensional document-feature matrix. Each pattern is iteratively selected from the document-feature matrix for each document. Similarity measures between each pattern are calculated. The occurrence frequencies, beginning from a substantially maximal similarity value, are transformed into a one-dimensional signal in scaleable vector form ordered in sequence of relative decreasing similarity. Wavelet and scaling coefficients are derived from the one-dimensional scale signal.

A further embodiment provides a system and method for abstracting semantically latent genetic subsequences extracted from a plurality of genetic sequences. Generic subsequences are extracted from a plurality of genetic sequences. Each genetic sequence includes a collection of at least one of genetic codes for DNA nucleotides and amino acids. A frequency of occurrence for each genetic subsequence is accumulated for each of the genetic sequences from which the genetic subsequences originated. The occurrence frequencies for each of the genetic subsequences are mapped into a set of patterns of occurrence frequencies, one such pattern per genetic sequence, arranged in a two-dimensional genetic subsequence matrix. Each pattern is iteratively selected from the genetic subsequence matrix for each genetic sequence. Similarity measures between each occurrence frequency in each selected pattern are calculated. The occurrence frequencies, beginning from a substantially maximal similarity measure, are projected onto a one-dimensional signal in scaleable vector form ordered in sequence of relative decreasing similarity. Wavelet and scaling coefficients are derived the one-dimensional scale signal.

Still other embodiments of the present invention will become readily apparent to those skilled in the art from the following detailed description, wherein is described embodiments of the invention by way of illustrating the best mode contemplated for carrying out the invention. As will be realized, the invention is capable of other and different embodiments and its several details are capable of modifications in various obvious respects, all without departing from the scope of the present invention. Accordingly, the drawings and detailed description are to be regarded as illustrative in nature and not as restrictive.

### BRIEF DESCRIPTION OF DRAWINGS

FIGURE 1 is a block diagram showing a system for identifying critical features in an ordered scale space within a multi-dimensional feature space, in accordance with the present invention.
FIGURE 2 is a block diagram showing, by way of example, a set of documents.
FIGURE 3 is a Venn diagram showing, by way of example, the features extracted from the document set of FIGURE 2.
FIGURE 4 is a data structure diagram showing, by way of example, projections of the features extracted from the document set of FIGURE 2.
FIGURE 5 is a block diagram showing the software modules implementing the data collection analyzer of FIGURE 1.
FIGURE 6 is a process flow diagram showing the stages of feature analysis performed by the data collection analyzer of FIGURE 1.
FIGURE 7 is a flow diagram showing a method for identifying critical features in an ordered scale space within a multi-dimensional feature space, in accordance with the present invention.
FIGURE 8 is a flow diagram showing the routine for performing feature analysis for use in the method of FIGURE 7.
FIGURE 9 is a flow diagram showing the routine for determining a frequency of concepts for use in the routine of FIGURE 8.
FIGURE 10 is a data structure diagram showing a database record for a feature stored in the database of FIGURE 1.
FIGURE 11 is a data structure diagram showing, by way of example, a database table containing a lexicon of extracted features stored in the database of FIGURE 1.
FIGURE 12 is a graph showing, by way of example, a histogram of the frequencies of feature occurrences generated by the routine of FIGURE 9.
FIGURE 13 is a graph showing, by way of example, an increase in a number of features relative to a number of data collections.
FIGURE 14 is a table showing, by way of example, a matrix mapping of feature frequencies generated by the routine of FIGURE 9.
FIGURE 15 is a graph showing, by way of example, a corpus graph of the frequency of feature occurrences generated by the routine of FIGURE 9.
FIGURE 16 is a flow diagram showing a routine for transforming a problem space into a scale space for use in the routine of FIGURE 8.
FIGURE 17 is a flow diagram showing the routine for generating similarity measures and forming clusters for use in the routine of FIGURE 16.
FIGURE 18 is a table showing, by way of example, the feature clusters created by the routine of FIGURE 17
FIGURE 19 is a flow diagram showing a routine for identifying critical features for use in the method of FIGURE 7.

### MODE(S) FOR CARRYING OUT THE INVENTION

### Glossary

| | |
|---|---|
| *Document:* | A base collection of data used for analysis as a data set. |
| *Instance:* | A base collection of data used for analysis as a data set. In the described embodiment, an instance is generally equivalent to a document. |
| *Document Vector:* | A set of feature values that describe a document. |
| *Document Signal:* | Equivalent to a document vector. |
| *Scale Space:* | Generally referred to as Hilbert function space H. |
| *Keyword:* | A literal search term which is either present or absent from a document or data collection. Keywords are not used in the evaluation of documents and data collections as described here. |
| *Term:* | A root stem of a single word appearing in the body of at least one document or data collection. Analogously, a genetic marker in a genome or protein sequence |
| *Phrase:* | Two or more words co-occurring in the body of a document or data collection. A phrase can include stop words. |
| *Feature:* | A collection of terms or phrases with common semantic meanings, also referred to as a *concept.* |
| *Theme:* | Two or more features with a common semantic meaning. |
| *Cluster:* | All documents or data collections that falling within a pre-defined measure of similarity. |
| *Corpus:* | All text documents that define the entire raw data set. |

The foregoing terms are used throughout this document and, unless indicated otherwise, are assigned the meanings presented above. Further, although described with reference to document analysis, the terms apply analogously to other forms of unstructured data, including genome and protein sequences and similar data collections having a vocabulary, grammar and atomic data units, as would be recognized by one skilled in the art.

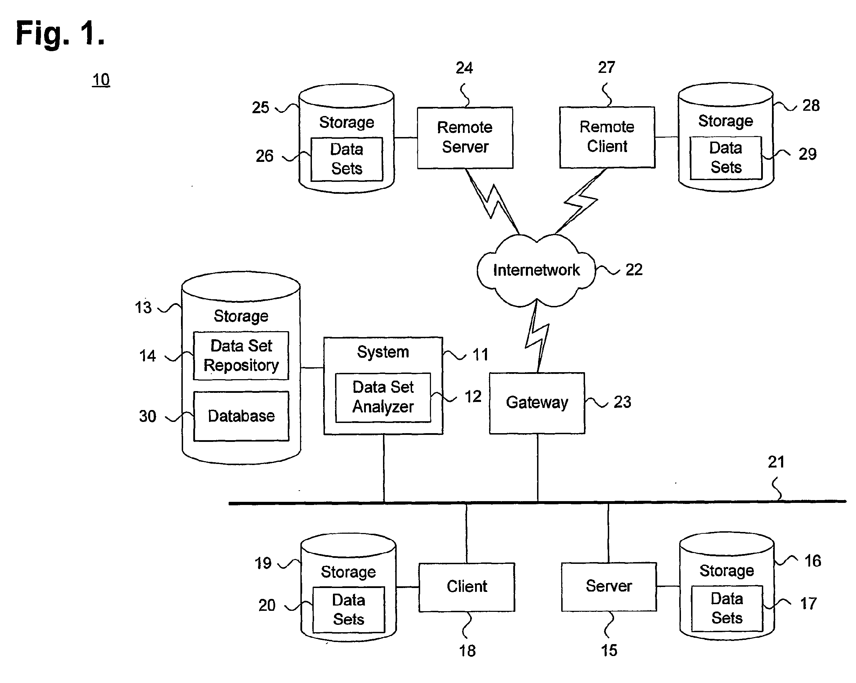

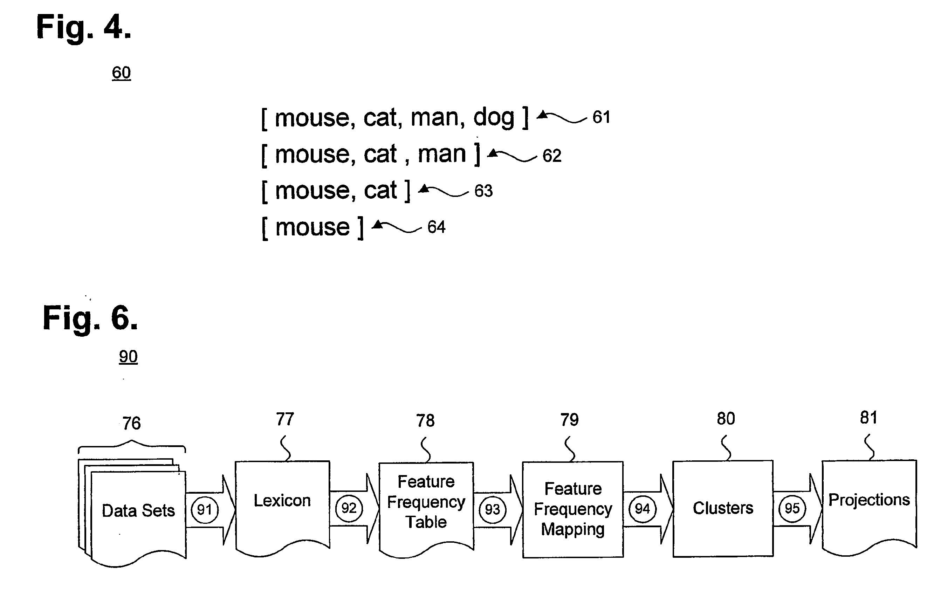

FIGURE 1 is a block diagram showing a system 11 for identifying critical features in an ordered scale space within a multi-dimensional feature space, in accordance with the present invention. The scale space is also known as Hilbert function space. By way of illustration, the system 11 operates in a distributed computing environment 10, which includes a plurality of heterogeneous systems and data collection sources. The system 11 implements a data collection analyzer 12, as further described below beginning with reference to FIGURE 4, for evaluating latent semantic features in unstructured data collections. The system 11 is coupled to a storage device 13 which stores a data collections repository 14 for archiving the data collections and a database 30 for maintaining data collection feature information.

The document analyzer 12 analyzes data collections retrieved from a plurality of local sources. The local sources include data collections 17 maintained in a storage device 16 coupled to a local server 15 and data collections 20 maintained in a storage device 19 coupled to a local client 18. The local server 15 and local client 18 are interconnected to the system 11 over an intranetwork 21. In addition, the data collection analyzer 12 can identify and retrieve data collections from remote sources over an internetwork 22, including the Internet, through a gateway 23 interfaced to the intranetwork 21. The remote sources include data collections 26 maintained in a storage device 25 coupled to a remote server 24 and data collections 29 maintained in a storage device 28 coupled to a remote client 27.

The individual data collections 17, 20, 26, 29 each constitute a semantically-related collection of stored data, including all forms and types of unstructured and semi-structured (textual) data, including electronic message stores, such as electronic mail (email) folders, word processing documents or Hypertext documents, and could also include graphical or multimedia data. The unstructured data also includes genome and protein sequences and similar data collections. The data collections include some form of vocabulary with which atomic data units are defined and features are semantically-related by a grammar, as would be recognized by one skilled in the art. An atomic data unit is analogous to a feature and consists of one or more searchable characteristics which, when taken singly or in combination, represent a grouping having a common semantic meaning. The grammar allows the features to be combined syntactically and semantically and enables the discovery of latent semantic meanings. The documents could also be in the form of structured data, such as stored in a spreadsheet or database. Content mined from these types of documents will not require preprocessing, as described below.

In the described embodiment, the individual data collections 17, 20, 26, 29 include electronic message folders, such as maintained by the Outlook and Outlook Express products, licensed by Microsoft Corporation, Redmond, Washington. The database is an SQL-based relational database, such as the Oracle database management system, Release 8, licensed by Oracle Corporation, Redwood Shores, California.

The individual computer systems, including system 11, server 15, client 18, remote server 24 and remote client 27, are general purpose, programmed digital computing devices consisting of a central processing unit (CPU), random access memory (RAM), non-volatile secondary storage, such as a hard drive or CD ROM drive, network or wireless interfaces, and peripheral devices, including user interfacing means, such as a keyboard and display. Program code, including software programs, and data are loaded into the RAM for execution and processing by the CPU and results are generated for display, output, transmittal, or storage.

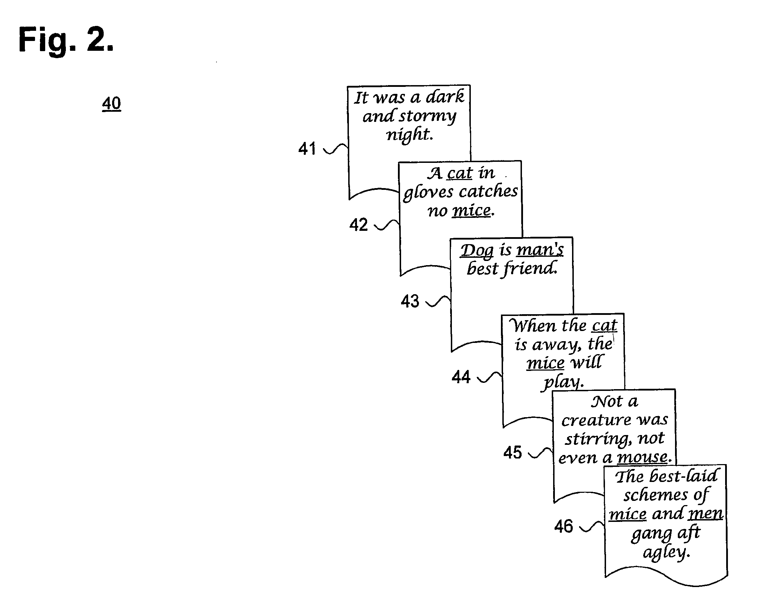

The complete set of features extractable from a given document or data collection can be modeled in a logical *feature space,* also referred to as Hilbert function space H. The individual features form a *feature set* from which themes can be extracted. For purposes of illustration, FIGURE 2 is a block diagram showing, by way of example, a set 40 of documents 41-46. Each individual document 41-46 comprises a data collection composed of individual terms. For instance, documents 42, 44, 45, and 46 respectively contain "mice," "mice," "mouse," and "mice," the root stem of which is "mouse." Similarly, documents 42 and 43 both contain "cat;" documents 43 and 46 respectively contain "man's" and "men," the root stem of which is "man;" and document 43 contains "dog." Each set of terms constitutes a feature. Documents 42, 44, 45, and 46 contain the term "mouse" as a feature. Similarly, documents 42 and 43 contain the term "cat," documents 43 and 46 contain the term "man," and document 43 contains the term "dog" as a feature. Thus, features "mouse," "cat," "man," and "dog" form the corpus of the document set 40.

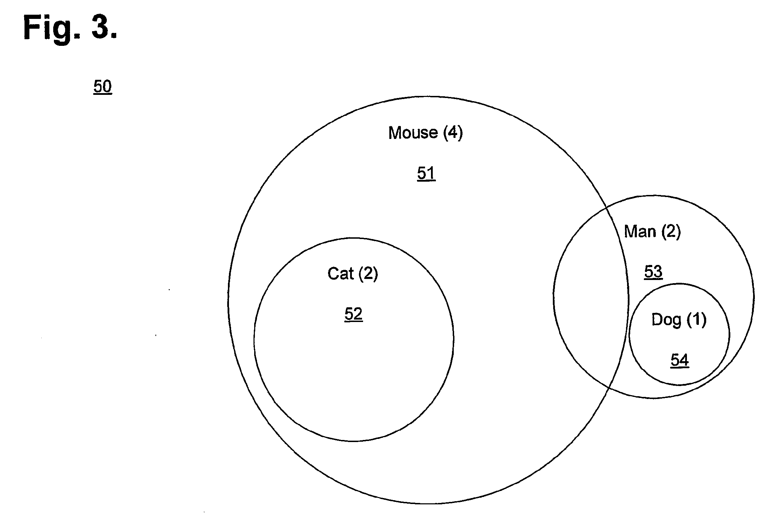

FIGURE 3 is a Venn diagram 50 showing, by way of example, the features 51-54 extracted from the document set 40 of FIGURE 2. The feature "mouse" occurs four times in the document set 40. Similarly, the features "cat," "man," and "dog" respectively occur two times, two times, and one time. Further, the features "mouse" and "cat" consistently co-occur together in the document set 40 and form a theme, "mouse and cat." "Mouse" and "man" also co-occur and form a second theme, "mouse and man." "Man" and "dog" co-occur and form a third theme, "man and dog." The Venn diagram diagrammatically illustrates the interrelationships of the thematic co-occurrences in two dimensions and reflects that "mouse and cat" is the strongest theme in the document set 40.

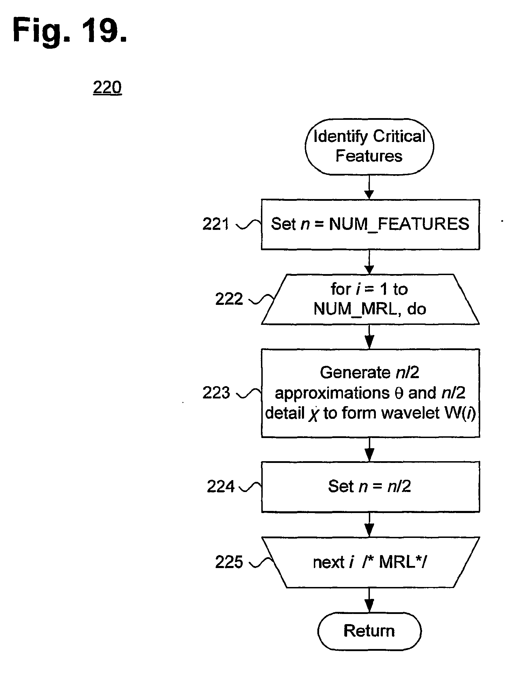

Venn diagrams are two-dimensional representations, which can only map thematic overlap along a single dimension. As further described below beginning with reference to FIGURE 19, the individual features can be more accurately modeled as clusters in a multi-dimensional feature space. In turn, the clusters can be projected onto an ordered and prioritized one-dimensional feature vectors, or projections, modeled in Hilbert function space H reflecting the relative strengths of the interrelationships between the respective features and themes. The ordered feature vectors constitute a "semantic" signal amenable to signal processing techniques, such as quantization and encoding.

FIGURE 4 is a data structure diagram showing, by way of example, projections 60 of the features extracted from the document set 40 of FIGURE 2. The projections 60 are shown in four levels of detail 61-64 in scale space. In the highest or most detailed level 61, all related features are described in order of decreasing interrelatedness. For instance, the feature "mouse" is most related to the feature "cat" than to features "man" and "dog." As well, the feature "mouse" is also more related to feature "man" than to feature "dog." The feature "dog" is the least related feature.

At the second highest detail level 62, the feature "dog" is omitted. Similarly, in the third and fourth detail levels 63, 64, the features "man" and "cat" are respectively omitted. The fourth detail level 64 reflects the most relevant feature present in the document set 40, "mouse," which occurs four times, and therefore abstracts the corpus at a minimal level.

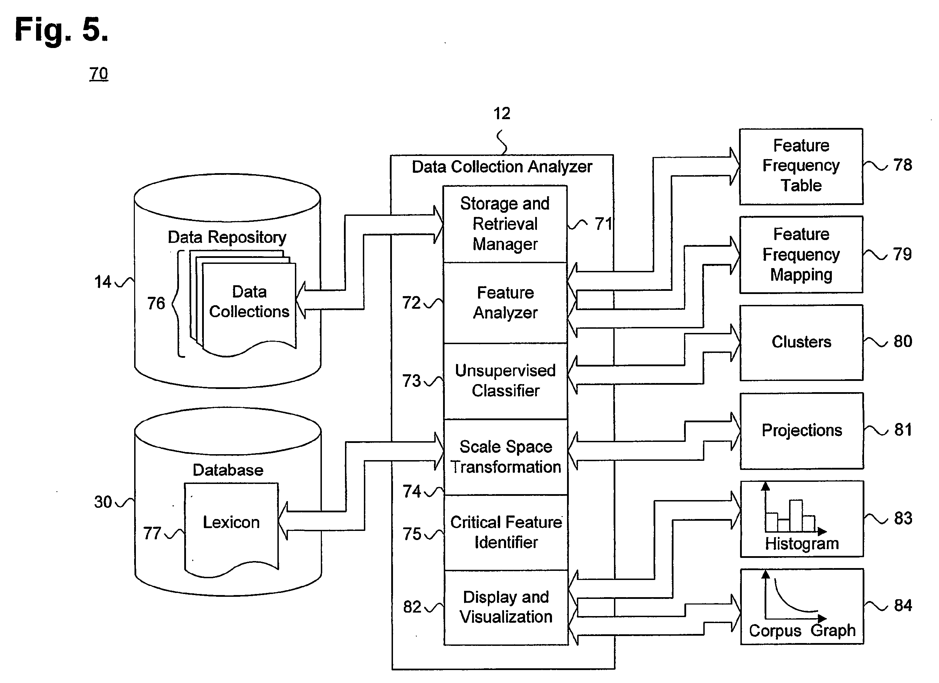

FIGURE 5 is a block diagram showing the software modules 70 implementing the data collection analyzer 12 of FIGURE 1. The data collection analyzer 12 includes six modules: storage and retrieval manager 71, feature analyzer 72, unsupervised classifier 73, scale space transformation 74, critical feature identifier 75, and display and visualization 82. The storage and retrieval manager 71 identifies and retrieves data collections 76 into the data repository 14. The data collections 76 are retrieved from various sources, including local and remote clients and server stores. The feature analyzer 72 performs the bulk of the feature mining processing. The unsupervised classifier 73 processes patterns of frequency occurrences expressed in feature space into reordered vectors expressed in scale space. The scale space transformation 74 abstracts the scale space vectors into varying levels of detail with, for instance, wavelet and scaling coefficients, through multiresolution analysis. The display and visualization 82 complements the operations performed by the feature analyzer 72, unsupervised classifier 73, scale space transformation 74, and critical feature identifier 75 by presenting visual representations of the information extracted from the data collections 76. The display and visualization 82 can also generate a graphical representation of the mixed and processed features, which preserves independent variable relationships, such as described in common-assigned U.S. Patent Application Serial No. 09/944,475, filed August 31, 2001.

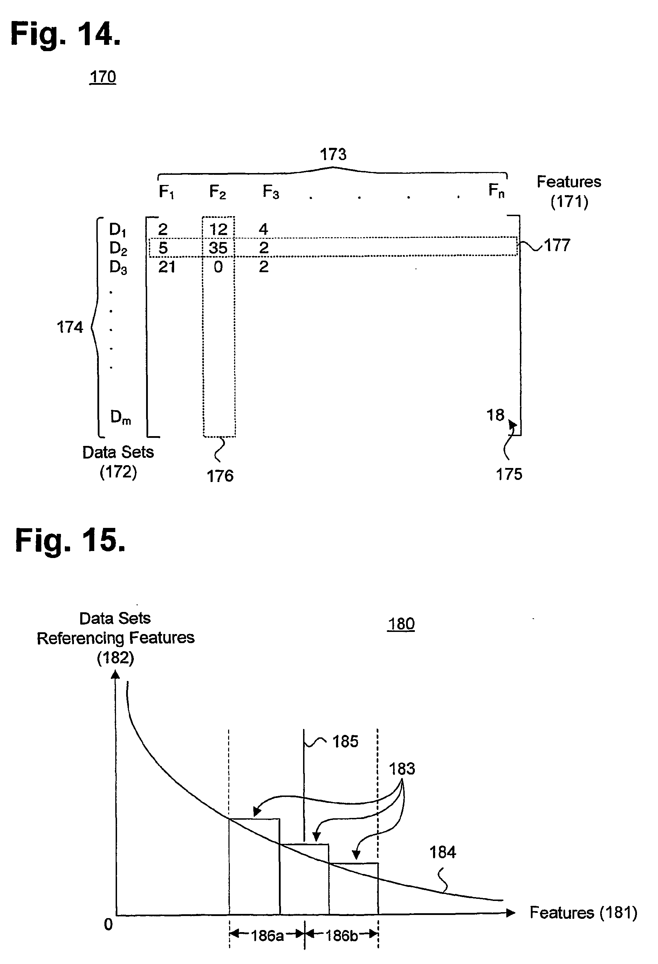

During text analysis, the feature analyzer 72 identifies terms and phrases and extracts features in the form of noun phrases, genome or protein markers, or similar atomic data units, which are then stored in a lexicon 77 maintained in the database 30. After normalizing the extracted features, the feature analyzer 72 generates a feature frequency table 78 of inter-document feature occurrences and an ordered feature frequency mapping matrix 79, as further described below with reference to FIGURE 14. The feature frequency table 78 maps the occurrences of features on a per document basis and the ordered feature frequency mapping matrix 79 maps the occurrences of all features over the entire corpus or data collection.

The unsupervised classifier 73 generates logical clusters 80 of the extracted features in a multi-dimensional feature space for modeling semantic meaning. Each cluster 80 groups semantically-related themes based on relative similarity measures, for instance, in terms of a chosen *L²* distance metric.

In the described embodiment, the *L²* distance metrics are defined in *L²* function space, which is the space of absolutely square integrable functions, such as described in B.B. Hubbard, "The World According to Wavelets, The Story of a Mathematical Technique in the Making," pp. 227-229, A.K. Peters (2d ed. 1998). The *L²* distance metric is equivalent to the Euclidean distance between two vectors. Other distance measures include correlation, direction cosines, Minkowski metrics, Tanimoto similarity measures, Mahanobis distances, Hamming distances, Levenshtein distances, maximum probability distances, and similar distance metrics as are known in the art, such as described in T. Kohonen, "Self-Organizing Maps," Ch. 1.2, Springer-Verlag (3d ed. 2001).

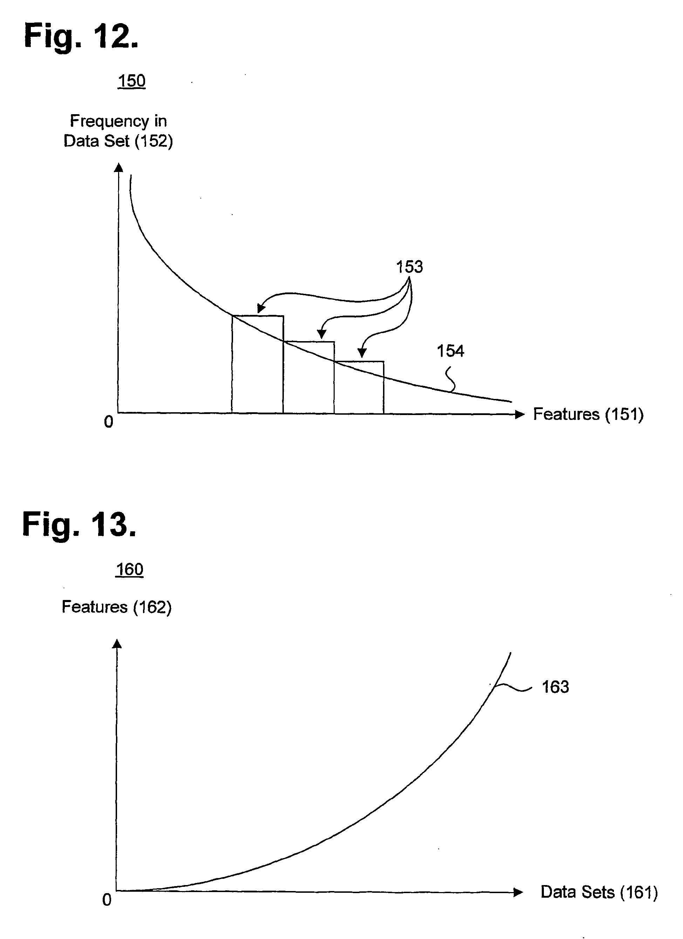

The scale space transformation 74 forms projections 81 of the clusters 80 into one-dimensional ordered and prioritized scale space. The projections 81 are formed using wavelet and scaling coefficients (not shown). The critical feature identifier 75 derives wavelet and scaling coefficients from the one-dimensional document signal. Finally, the display and visualization 82 generates a histogram 83 of feature occurrences per document or data collection, as further described below with reference to FIGURE 13, and a corpus graph 84 of feature occurrences over all data collections, as further described below with reference to FIGURE 15.

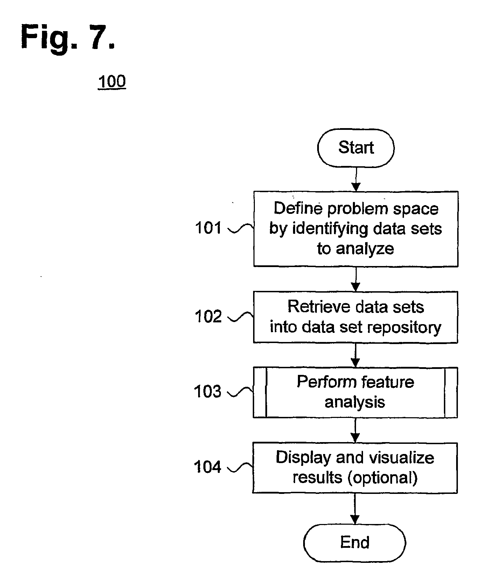

Each module is a computer program, procedure or module written as source code in a conventional programming language, such as the C++, programming language, and is presented for execution by the CPU as object or byte code, as is known in the art. The various implementations of the source code and object and byte codes can be held on a computer-readable storage medium or embodied on a transmission medium in a carrier wave. The data collection analyzer 12 operates in accordance with a sequence of process steps, as further described below with reference to FIGURE 7.

FIGURE 6 is a process flow diagram showing the stages 90 of feature analysis performed by the data collection analyzer 12 of FIGURE 1. The individual data collections 76 are preprocessed and noun phrases, genome and protein markers, or similar atomic data units, are extracted as features (transition 91) into the lexicon 77. The features are normalized and queried (transition 92) to generate the feature frequency table 78. The feature frequency table 78 identifies individual features and respective frequencies of occurrence within each data collection 76. The frequencies of feature occurrences are mapped (transition 93) into the ordered feature frequency mapping matrix 79, which associates the frequencies of occurrence of each feature on a per-data collection basis over all data collections. The features are formed (transition 94) into clusters 80 of semantically-related themes based on relative similarity measured, for instance, in terms of the distance measure. Finally, the clusters 80 are projected (transition 95) into projections 81, which are reordered and prioritized into one-dimensional document signal vectors.

FIGURE 7 is a flow diagram showing a method 100 for identifying critical features in an ordered scale space within a multi-dimensional feature space 40 (shown in FIGURE 2), in accordance with the present invention. As a preliminary step, the problem space is defined by identifying the data collection to analyze (block 101). The problem space could be any collection of structured or unstructured data collections, including documents or genome or protein sequences, as would be recognized by one skilled in the art. The data collections 41 are retrieved from the data repository 14 (shown in FIGURE 1) (block 102).

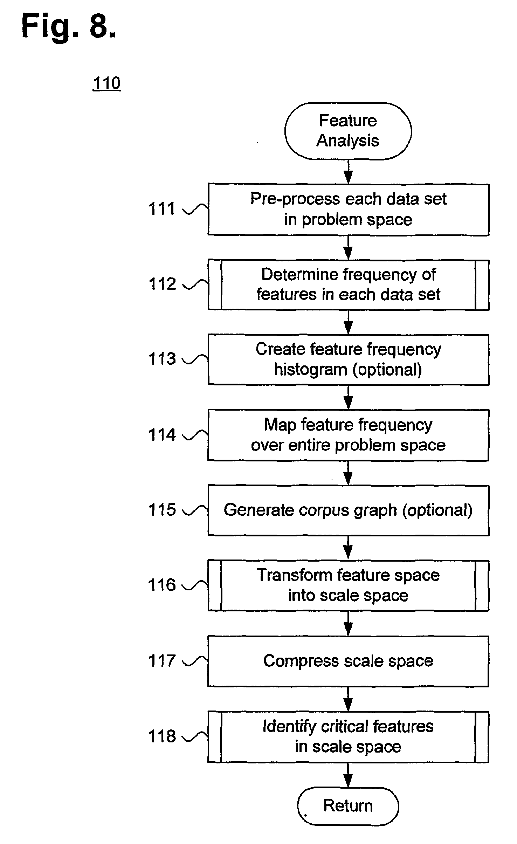

Once identified and retrieved, the data collections 41 are analyzed for features (block 103), as further described below with reference to FIGURE 8. During feature analysis, an ordered matrix 79 mapping the frequencies occurrence of extracted features (shown below in FIGURE 14) is constructed to summarize the semantic content inherent in the data collections 41. Finally, the semantic content extracted from the data collections 41 can optionally be displayed and visualized graphically (block 104), such as described in our U.S. Patent Application Serial No. 09/944,475, filed August 31, 2001; U.S. Patent Application Serial No. 09/943,918, filed August 31, 2001; and U.S. Patent Application Serial No. 10/084,401, filed February 25, 2002. The method then terminates.

FIGURE 8 is a flow diagram showing the routine 110 for performing feature analysis for use in the method 100 of FIGURE 7. The purpose of this routine is to extract and index features from the data collections 41. In the described embodiment, terms and phrases are extracted typically from documents. Document features might also include paragraph count, sentences, date, title, folder, author, subject, abstract, and so forth. For genome or protein sequences, markers are extracted. For other forms of structured or unstructured data, atomic data units characteristic of semantic content are extracted, as would be recognized by one skilled in the art.

Preliminarily, each data collection 41 in the problem space is preprocessed (block 111) to remove stop words or similar atomic non-probative data units. For data collections 41 consisting of documents, stop words include commonly occurring words, such as indefinite articles ("a" and "an"), definite articles ("the"), pronouns ("I", "he" and "she"), connectors ("and" and "or"), and similar non-substantive words. For genome and protein sequences, stop words include non-marker subsequence combinations. Other forms of stop words or non-probative data units may require removal or filtering, as would be recognized by one skilled in the art.

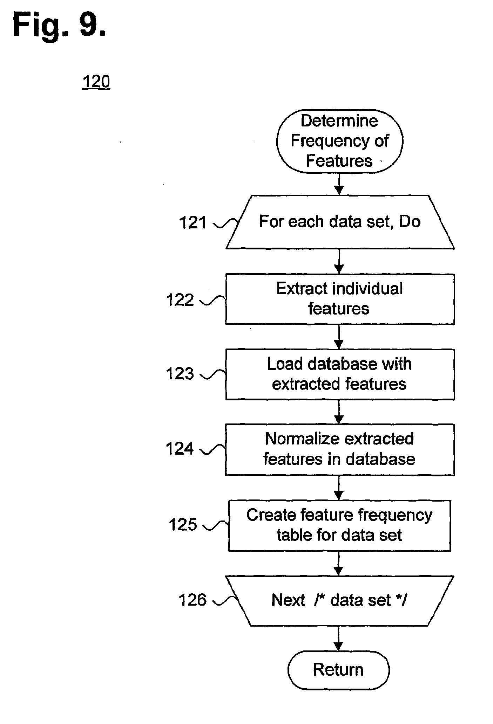

Following preprocessing, the frequency of occurrences of features for each data collection 41 is determined (block 112), as further described below with reference to FIGURE 9. Optionally, a histogram 83 of the frequency of feature occurrences per document or data collection (shown in FIGURE 4) is logically created (block 113). Each histogram 83, as further described below with reference to FIGURE 13, maps the relative frequency of occurrence of each extracted feature on a per-document basis. Next, the frequency of occurrences of features for all data sets 41 is mapped over the entire problem space (block 114) by creating an ordered feature frequency mapping matrix 79, as further described below with reference to FIGURE 14. Optionally, a frequency of feature occurrences graph 84 (shown in FIGURE 4) is logically created (block 115). The corpus graph, as further described below with reference to FIGURE 15, is created for all data sets 41 and graphically maps the semantically-related concepts based on the cumulative occurrences of the extracted features.

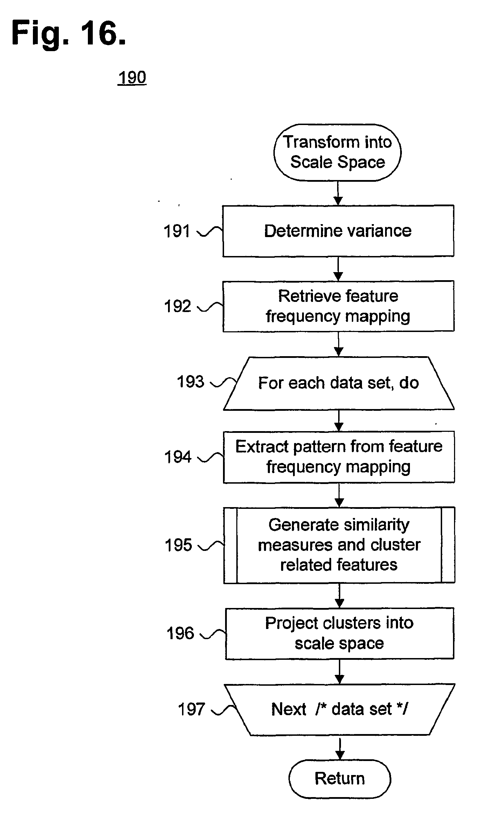

Multiresolution analysis is performed on the ordered frequency mapping matrix 79 (block 116), as further described below with reference to FIGURE 16. Cluster reordering generates a set of ordered vectors, which each constitute a "semantic" signal amenable to conventional signal processing techniques. Thus, the ordered vectors can be analyzed, such as through multiresolution analysis, quantized (block 117) and encoded (block 118), as is known in the art. The routine then returns.

FIGURE 9 is a flow diagram showing the routine 120 for determining a frequency of concepts for use in the routine of FIGURE 8. The purpose of this routine is to extract individual features from each data collection and to create a normalized representation of the feature occurrences and co-occurrences on a per-data collection basis. In the described embodiment, features for documents are defined on the basis of the extracted noun phrases, although individual nouns or tri-grams (word triples) could be used in lieu of noun phrases. Terms and phrases are typically extracted from the documents using the LinguistX product licensed by Inxight Software, Inc., Santa Clara, California. Other document features could also be extracted, including paragraph count, sentences, date, title, directory, folder, author, subject, abstract, verb phrases, and so forth. Genome and protein sequences are similarly extracted using recognized protein and amino markers, as are known in the art.

Each data collection is iteratively processed (blocks 121-126) as follows. Initially, individual features, such as noun phrases or genome and protein sequence markers, are extracted from each data collection 41 (block 122). Once extracted, the individual features are loaded into records stored in the database 30 (shown in FIGURE 1) (block 123). The features stored in the database 30 are normalized (block 124) such that each feature appears as a record only once. In the described embodiment, the records are normalized into third normal form, although other normalization schemas could be used. A feature frequency table 78 (shown in FIGURE 5) is created for the data collection 41 (block 125). The feature frequency table 78 maps the number of occurrences and co-occurrences of each extracted feature for the data collection. Iterative processing continues (block 126) for each remaining data collection 41, after which the routine returns.

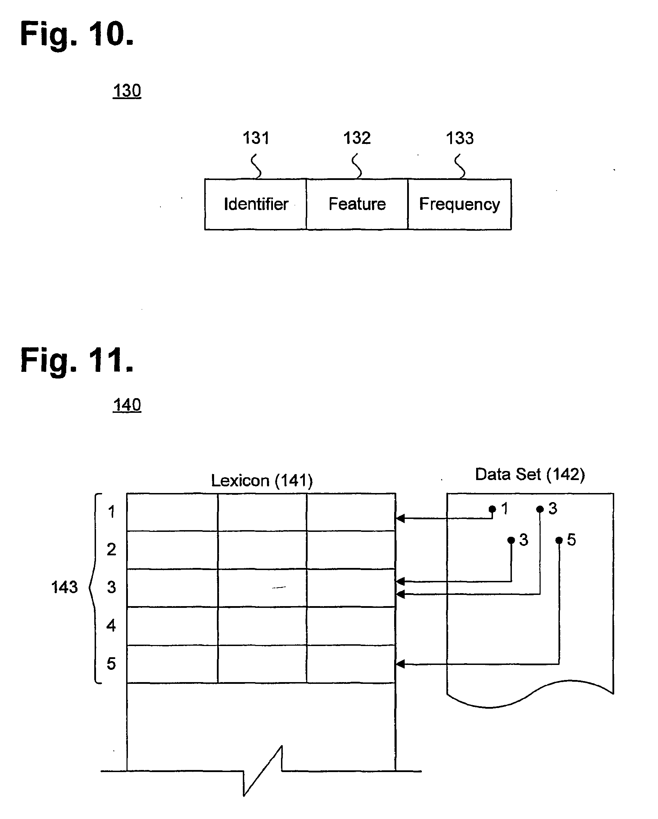

FIGURE 10 is a data structure diagram showing a database record 130 for a feature stored in the database 30 of FIGURE 1. Each database record 130 includes fields for storing an identifier 131, feature 132 and frequency 133. The identifier 131 is a monotonically increasing integer value that uniquely identifies the feature 132 stored in each record 130. The identifier 131 could equally be any other form of distinctive label, as would be recognized by one skilled in the art. The frequency of occurrence of each feature is tallied in the frequency 133 on both per-instance collection and entire problem space bases.

FIGURE 11 is a data structure diagram showing, by way of example, a database table 140 containing a lexicon 141 of extracted features stored in the database 30 of FIGURE 1. The lexicon 141 maps the individual occurrences of identified features 143 extracted for any given data collection 142. By way of example, the data collection 142 includes three features, numbered 1, 3 and 5. Feature 1 occurs once in data collection 142, feature 3 occurs twice, and feature 5 also occurs once. The lexicon tallies and represents the occurrences of frequency of the features 1, 3 and 5 across all data collections 44 in the problem space.

The extracted features in the lexicon 141 can be visualized graphically. FIGURE 12 is a graph showing, by way of example, a histogram 150 of the frequencies of feature occurrences generated by the routine of FIGURE 9. The x-axis defines the individual features 151 for each document and the y-axis defines the frequencies of occurrence of each feature 152. The features are mapped in order of decreasing frequency 153 to generate a curve 154 representing the semantic content of the document 44. Accordingly, features appearing on the increasing end of the curve 154 have a high frequency of occurrence while features appearing on the descending end of the curve 154 have a low frequency of occurrence.

Referring back to FIGURE 11, the lexicon 141 reflects the features for individual data collections and can contain a significant number of feature occurrences, depending upon the size of the data collection. The individual lexicons 141 can be logically combined to form a feature space over all data collections. FIGURE 13 is a graph 160 showing, by way of example, an increase in a number of features relative to a number of data collections. The x-axis defines the data collections 161 for the problem space and the y-axis defines the number of features 162 extracted. Mapping the feature space (number of features 162) over the problem space (number of data collections 161) generates a curve 163 representing the cumulative number of features, which increases 163 proportional to the number of data collections 161. Each additional extracted feature produces a new dimension within the feature space, which, without ordering and prioritizing, poorly abstracts semantic content in an efficient manner.

FIGURE 14 is a table showing, by way of example, a matrix mapping of feature frequencies 170 generated by the routine of FIGURE 9. The feature frequency mapping matrix 170 maps features 173 along a horizontal dimension 171 and data collections 174 along a vertical dimension 172, although the assignment of respective dimensions is arbitrary and can be inversely reassigned, as would be recognized by one skilled in the art. Each cell 175 within the matrix 170 contains the cumulative number of occurrences of each feature 173 within a given data collection 174. According, each feature column constitutes a feature set 176 and each data collection row constitutes an instance or pattern 177. Each pattern 177 represents a one-dimensional signal in scaleable vector form and conceptually insignificant features within the pattern 177 represent noise.

FIGURE 15 is a graph showing, by way of example, a corpus graph 180 of the frequency of feature occurrences generated by the routine of FIGURE 9. The graph 180 visualizes the extracted features as tallied in the feature frequency mapping matrix 170 (shown in FIGURE 14). The x-axis defines the individual features 181 for all data collections and the y-axis defines the number of data collections 41 referencing each feature 182. The individual features are mapped in order of descending frequency of occurrence 183 to generate a curve 184 representing the latent semantics of the set of data collections 41. The curve 184 is used to generate clusters, are projected onto an ordered and prioritized one-dimensional projections in Hilbert function space.

During cluster formation, a median value 185 is selected and edge conditions 186a-b are established to discriminate between features which occur too frequently versus features which occur too infrequently. Those data collections falling within the edge conditions 186a-b form a subset of data collections containing latent features. In the described embodiment, the median value 185 is data collection-type dependent. For efficiency, the upper edge condition 186b is set to 70% and a subset of the features immediately preceding the upper edge condition 186b are selected, although other forms of threshold discrimination could also be used.

FIGURE 16 is a flow diagram 190 showing a routine for transforming a problem space into a scale space for use in the routine of FIGURE 8. The purpose of this routine is to create clusters 80 (shown in FIGURE 4) that are used to form one-dimensional projections 81 (shown in FIGURE 4) in scale space from which critical features are identified.

Briefly, a single cluster is created initially and additional clusters are added using some form of unsupervised clustering, such as simple clustering, hierarchical clustering, splitting methods, and merging methods, such as described in T. Kohonen, *Ibid.* at Ch. 1.3. The form of clustering used is not critical and could be any other form of unsupervised training as is known in the art. Each cluster consists of those data collections that share related features as measured by some distance metric mapped in the multi-dimensional feature space. The clusters are projected onto one-dimensional ordered vectors, which are encoded as wavelet and scaling coefficients and analyzed for critical features.

Initially, a variance specifying an upper bound on the distance measure in the multi-dimensional feature space is determined (block 191). In the described embodiment, a variance of five percent is specified, although other variance values, either greater or lesser than five percent, could be used as appropriate. Those clusters falling outside the pre-determined variance are grouped into separate clusters, such that the features are distributed over a meaningful range of clusters and every instance in the problem space appears in at least one cluster.

The feature frequency mapping matrix 170 (shown in FIGURE 14) is then retrieved (block 192). The ordered feature frequency mapping matrix 79 is expressed in a multi-dimensional feature space. Each feature creates a new dimension, which increases the feature space size linearly with each successively extracted feature. Accordingly, the data collections are iteratively processed (blocks 193-197) to transform the multi-dimensional feature space into a single dimensional document vector (signal), as follows. During each iteration (block 193), a pattern 177 for the current data collection is extracted from the feature frequency mapping matrix 170 (block 194). Similarity measures are generated from the pattern 177 and related features are formed into clusters 80 (shown in FIGURE 5) (block 195) using some form of unsupervised clustering, as described above. Those features falling within the pre-determined variance, as measured as measured by the distance metric, are identified and grouped into the same cluster, while those features falling outside the pre-determined variance are assigned to another cluster.

Next, the clusters 80 in feature space are each projected onto a one-dimensional signal in scaleable vector form (block 196). The ordered vectors constitute a "semantic" signal amenable to signal processing techniques, such as multiresolution analysis. In the described embodiment, the clusters 80 are projected by iteratively ordering the features identified to each cluster into the vector 61. Alternatively, cluster formation (block 195) and projection (block 196) could be performed in a single set of operations using a self-organizing map, such as described in T. Kohonen, *Ibid.* at Ch. 3. Other methodologies for generating similarity measures, forming clusters, and projecting into scale space could apply equally and substituted for or perform in combination with the foregoing described approaches, as would be recognized by one skilled in the art. Iterative processing then continues (block 197) for each remaining next data collection, after which the routine returns.

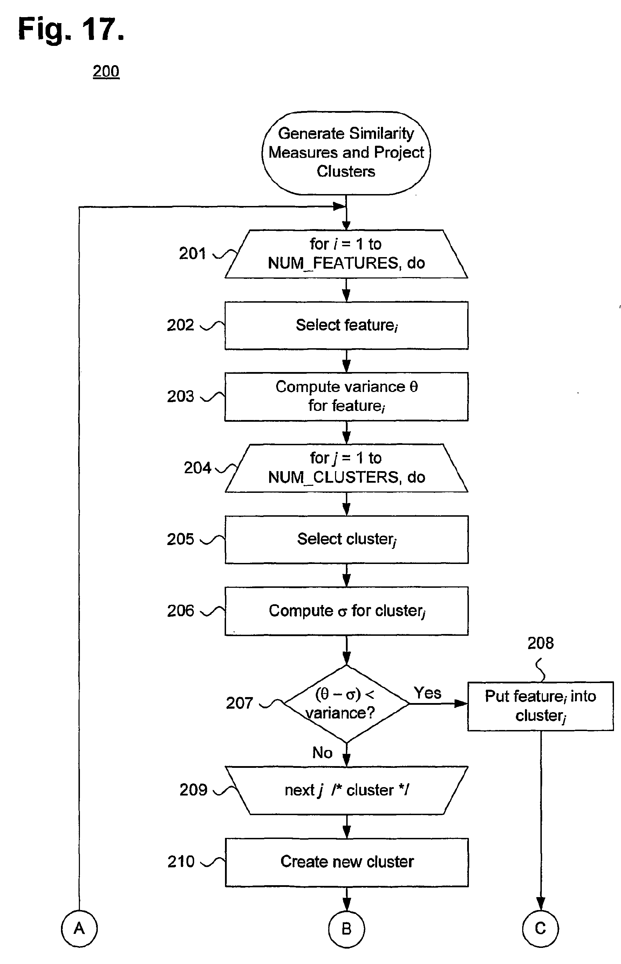

FIGURE 17 is a flow diagram 200 showing the routine for generating similarity measures and forming clusters for use in the routine of FIGURE 16. The purpose of this routine is to identify those features closest in similarity within the feature space and to group two or more sets of similar features into individual clusters. The clusters enable visualization of the multi-dimensional feature space.

Features and clusters are iteratively processed in a pair of nested loops (blocks 201-212 and 204-209). During each iteration of the outer processing loop (blocks 201-212), each feature *i* is processed (block 201). The feature i is first selected (block 202) and the variance θ for feature *i* is computed (block 203).

During each iteration of the inner processing loop (block 204-209), each cluster *j* is processed (block 204). The cluster *j* is selected (block 205) and the angle σ relative to the common origin is computed for the cluster *j* (block 206). Note the angle σ must be recomputed regularly for each cluster *j* as features are added or removed from clusters. The difference between the angle θ for the feature *i* and the angle σ for the cluster *j* is compared to the predetermined variance (block 207). If the difference is less than the predetermined variance (block 207), the feature *i* is put into the cluster *j* (block 208) and the iterative processing loop (block 204-209) is terminated. If the difference is greater than or equal to the variance (block 207), the next cluster *j* is processed (block 209) until all clusters have been processed (blocks 204-209).

If the difference between the angle θ for the feature *i* and the angle σ for each of the clusters exceeds the variance, a new cluster is created (block 210) and the counter *num_clusters* is incremented (block 211). Processing continues with the next feature *i* (block 212) until all features have been processed (blocks 201-212). The categorization of clusters is repeated (block 213) if necessary. In the described embodiment, the cluster categorization (blocks 201-212) is repeated at least once until the set of clusters settles. Finally, the clusters can be finalized (block 214) as an optional step. Finalization includes merging two or more clusters into a single cluster, splitting a single cluster into two or more clusters, removing minimal or outlier clusters, and similar operations, as would be recognized by one skilled in the art. The routine then returns.

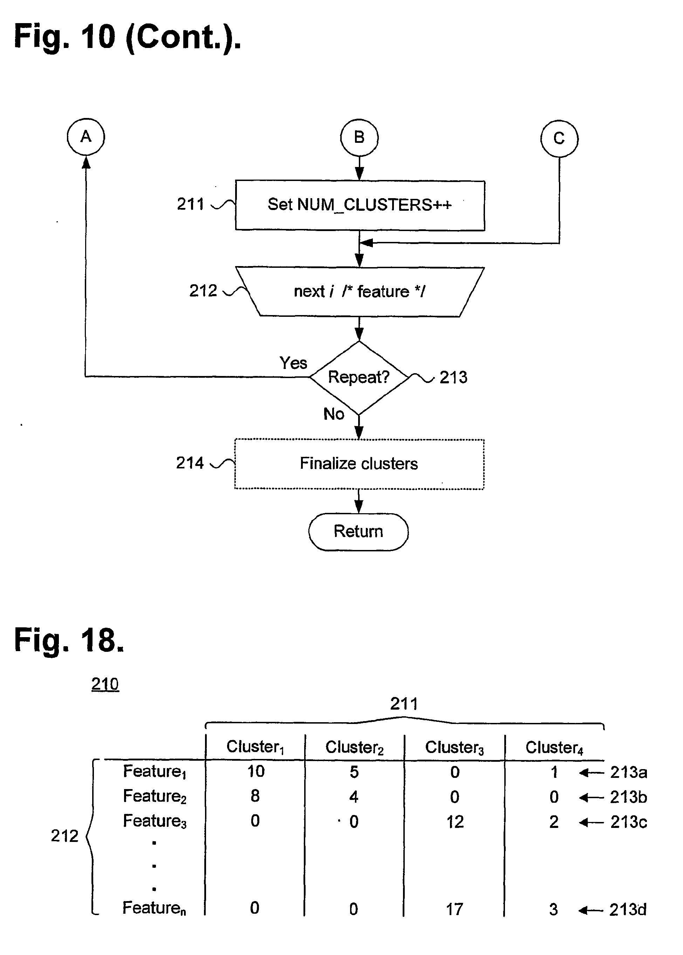

FIGURE 18 is a table 210 showing, by way of example, the feature clusters created by the routine of FIGURE 17. Ideally, each of the features 211 should appear in at least one of the clusters 212, thereby ensuring that each data collection appears in some cluster. The distance calculations 213a-d between the data collections for a given feature are determined. Those distance values 213a-d falling within a predetermined variance are assigned to each individual cluster. The table 210 can be used to visualize the clusters in a multi-dimensional feature space.

FIGURE 19 is a flow diagram showing a routine for identifying critical features for use in the method of FIGURE 7. The purpose of this routine is to transform the scale space vectors into varying levels of detail with wavelet and scaling coefficients through multiresolution analysis. Wavelet decomposition is a form of signal filtering that provides a coarse summary of the original data and details lost during decomposition, thereby allowing the data stream to express multiple levels of detail. Each wavelet and scaling coefficent is formed through multiresolution analysis, which typically halves the data stream during each recursive step.

Thus, the size of the one-dimensional ordered vector 61 (shown in FIGURE 4) is determined by the total number of features n in the feature space (block 221). The vector 61 is then iteratively processed (blocks 222-225) through each multiresolution level as follows. First, *n*/2 wavelet coefficients and *n*/2 scaling functions ϕ are generated from the vector 61 to form a wavelet coefficients and scaling coefficients. In the described embodiment, the wavelet and scaling coefficients are generated by convolving the wavelet ψ and scaling ϕ functions with the ordered document vectors into a contiguous set of values in the vector 61. Other methodologies for convolving wavelet ψ and scaling ϕ functions could also be used, as would be recognized by one skilled in the art.

Following the first iteration of the wavelet and scaling *coefficient* generation, the number of features *n* is down-sampled (block 224) and each remaining multiresolution level is iteratively processed (blocks 222-225) until the desired minimum resolution of the signal is achieved. The routine then returns.

While the invention has been particularly shown and described as referenced to the embodiments thereof, those skilled in the art will understand that the foregoing and other changes in form and detail may be made therein without departing from the scope of the invention.

## Claims

1. A system (10) for identifying semantically-related features (212) in an ordered scale space within a multi-dimensional vector space representing a plurality of documents, comprising:
a feature analyzer (72) initially processing (110) features (173), comprising:
a feature extractor (71) extracting (122) the features from a plurality of documents (21) and normalizing (124) each feature; and
a feature mapper (79) determining frequencies of occurrence (183) for each of the features (173) in the documents (21) and mapping (114) the frequencies of occurrence (183) into vectors (177) with one vector (177) for each document (21);
an unsupervised classifier (73) generating (195) similarity measures between the frequencies of occurrence (183) in each vector (177) and forming clusters (80) that each comprise one or more of the features (173) having similarity measures within a predetermined variance;
a scale space transformer (74) ordering the features (173) in each one-dimensional signal (81) by decreasing similarity and projecting (196) each cluster (80) onto each one-dimensional signal (81) using wavelets and scaling coefficients; and
a feature identifier (75) recursively deriving (220) the wavelets and scaling coefficients from each one-dimensional signal (81) through successive levels of detail by decreasing the number of features sampled and analyzing the wavelets and scaling coefficients for the features of the documents.

2. A system according to Claim 1, further comprising:
a preprocessor preprocessing (111) each of the documents (21) prior to feature extraction to identify and logically remove stop words.

3. A system according to Claim 1, further comprising:
a database record (130) storing a single occurrence of each feature (173) in normalized form.

4. A system according to Claim 1, further comprising:
a feature frequency mapper (79) arranging the vectors (177) into a document feature matrix (170) according to the document (21) from which the features (173) in each vector (177) were extracted.

5. A system according to Claim 1, further comprising:
a similarity module calculating a distance measure between each occurrence frequency (183) as a similarity measure.

6. A system according to Claim 7, further comprising:
a self-organizing map of the multi-dimensional vector space formed prior to projection.

7. A system according to Claim 1, wherein the unsupervised classifier (73) categorizes the clusters (80), comprising:
a variance determiner determining (203) a variance for each of the features (173);
an angle determiner determining (206) an angle relative to a common origin for each of the clusters; and
a cluster assignor assigning (208) those features into the cluster where the angle and the variance are within the predetermined variance.

8. A system according to Claim 7, wherein the unsupervised classifier (73) repeatedly categorizes the clusters (80) and the variance determiner redetermines (203) a variance for each of the features (173); the angle determiner redetermines (206) the angle relative to the common origin for those clusters from which or into which one or more of the features are respectively removed or assigned; and the cluster assignor performs at least one of removing those features from the cluster where the angle and the variance are outside the predetermined variance and assigning (208) those features into the cluster where the angle and the variance are within the predetermined variance.

9. A system according to Claim 7, wherein the unsupervised classifier (73) finalizes (214) the clusters (80), comprising at least one of merging a plurality of the clusters into a single cluster; splitting a cluster into a plurality of clusters; and removing outlier clusters.

10. A method (100) for identifying semantically-related features (212) in an ordered scale space within a multi-dimensional vector space representing a plurality of documents (21), comprising:
processing features by extracting (122) the features (173) from the plurality of documents (21) and normalizing (124) each feature (173);
determining frequencies (183) of occurrence for each of the features (173) in the documents (21) and mapping (114) the frequencies of occurrence (183) into vectors (177) with one vector (177) for each document (21);
generating (195) similarity measures between the frequencies of occurrence (183) in each vector (177) and forming clusters (80) that each comprise one or more of the features (173) having similarity measures within a predetermined variance;
ordering the features (173) in each one-dimensional signal (81) by decreasing similarity;
projecting (196) each cluster (80) onto each one-dimensional signal (81) using wavelets and scaling coefficients; and
recursively deriving (220) the wavelets and scaling coefficients from each one-dimensional signal (81) through successive levels of detail by decreasing the number of features sampled and analyzing the wavelets and scaling coefficients for the features of the documents.

11. A method according to Claim 10, further comprising:
preprocessing (111) each of the documents (21) prior to feature extraction to identify and logically remove stop words.

12. A method according to Claim 10, further comprising:
storing a single occurrence of each feature (173) in normalized form.

13. A method according to Claim 10, further comprising:
arranging the vectors (177) into a document feature matrix (170) according to the document (21) from which the features (173) in each vector (177) were extracted.

14. A method according to Claim 10, further comprising:
calculating a distance measure between each frequency of occurrence (183) as a similarity measure.

15. A method according to Claim 10, further comprising:
generating a self-organizing map of the multi-dimensional vector space prior to projection.

16. A method according to Claim 10, further comprising:
categorizing the clusters (80), comprising:
determining (203) a variance for each of the features;
determining (206) an angle relative to a common origin for each of the clusters; and
assigning (208) those features into the cluster where the angle and the variance are within the predetermined variance.

17. A method according to Claim 16, further comprising:
repeatedly categorizing (213) the clusters (80), further comprising:
redetermining (203) a variance for each of the features;
redetermining (206) the angle relative to the common origin for those clusters from which or into which one or more of the features are respectively removed or assigned; and
performing at least one of:
removing those features from the cluster where the angle and the variance are outside the predetermined variance; and
assigning (208) those features into the cluster where the angle and the variance are within the predetermined variance.

18. A method according to Claim 16, further comprising:
finalizing (214) the clusters, comprising at least one of:
merging a plurality of the clusters into a single cluster;
splitting a cluster into a plurality of clusters; and
removing outlier clusters.

19. A computer-readable storage medium for a device holding code for performing the method according to any one of Claims 10 to 18.

## Patentansprüche

1. System (10) zum Identifizieren semantisch bezogener Merkmale (212) in einem geordneten Skala-Raum innerhalb eines multidimensionalen Vektor-Raums, welche eine Mehrzahl von Dokumenten darstellen, welches enthält:
einen Merkmals-Analysator (72), welcher anfangs Merkmale (173) verarbeitet (110), welcher enthält:
einen Merkmals-Extraktor (71), welcher die Merkmale von einer Mehrzahl von Dokumenten (21) extrahiert (122) und jedes Merkmal normalisiert (124); und
einen Merkmals-Abbilder (79), welcher Häufigkeiten eines Auftritts (183) für jedes der Merkmale (173) in den Dokumenten (21) bestimmt und die Häufigkeiten eines Auftrittes (183) in Vektoren (177) mit einem Vektor (177) für jedes Dokument (21) abbildet (114) ;
einen unbeaufsichtigten Klassifizierer (73), welcher Ähnlichkeits-Messungen zwischen den Häufigkeiten eines Auftrittes (183) in jedem Vektor (177) erzeugt (195) und Gruppen (80) ausbildet, wobei jede ein oder mehrere der Merkmale (173) enthält, welche Ähnlichkeits-Messungen innerhalb einer vorbestimmten Varianz haben;
einen Skala-Raum Umformer (74), welcher die Merkmale (173) in jedem eindimensionalen Signal (81) ordnet, indem eine Ähnlichkeit verringert wird, und jede Gruppe (80) auf jedes eindimensionale Signal (81) unter Verwendung von Wavelets und Skalierungs-Koeffizienten projiziert wird; und
einen Merkmals-Identifizierer (75), welcher die Wavelets und Skalierungs-Koeffizienten von jedem eindimensionalen Signal (81) durch sukzessive Detailpegel rekursiv herleitet (220), indem die Anzahl von abgetasteten Merkmalen verringert wird und die Wavelets und Skalierungs-Koeffizienten für die Merkmale von den Dokumenten analysiert werden.

2. System nach Anspruch 1, welches ferner enthält:
einen Vorprozessor, welcher jedes der Dokumente (21) vor einer Merkmals-Extraktion zum Identifizieren und logischen Entfernen von Stopp-Wörtern vorverarbeitet (111) .

3. System nach Anspruch 1, welches ferner enthält:
einen Datenbank-Aufzeichner (130), welcher ein einzelnes Auftreten von jedem Merkmal (173) in normalisierter Form speichert.

4. System nach Anspruch 1, welches ferner enthält:
einen Merkmals-Häufigkeits-Abbilder (79), welcher die Vektoren (177) in eine Dokument-Merkmals-Matrix (170) gemäß dem Dokument (21) anordnet, von welchem die Merkmale (173) in jedem Vektor (177) extrahiert sind.

5. System nach Anspruch 1, welches ferner enthält:
ein Ähnlichkeits-Modul, welches eine Distanz-Messung zwischen jeder Auftritts-Häufigkeit (183) als eine Ähnlichkeits-Messung berechnet.

6. System nach Anspruch 7, welches ferner enthält:
ein Eigenorganisations-Kennfeld des multidimensionalen Vektor-Raums, welches vor der Projektion ausgebildet ist.

7. System nach Anspruch 1, bei welchem der unbeaufsichtigte Klassifizierer (73) die Gruppen (80) kategorisiert, welcher enthält:
einen Varianz-Bestimmer, welcher eine Varianz für jedes der Merkmale (173) bestimmt (203);
einen Winkel-Bestimmer, welcher einen Winkel in Relation zu einem allgemeinen Ursprung für jede der Gruppen bestimmt (206); und
einen Gruppen-Zuweiser, welcher jene Merkmale in die Gruppe zuweist (208), bei welchen der Winkel und die Varianz innerhalb der vorbestimmten Varianz sind.

8. System nach Anspruch 7, bei welchem der unbeaufsichtigte Klassifizier (73) wiederholt die Gruppen (80) kategorisiert, und der Varianz-Bestimmer eine Varianz für jedes der Merkmale (173) neu bestimmt (203); wobei der Winkel-Bestimmer den Winkel in Relation zum allgemeinen Ursprung für jene Gruppen neu bestimmt (206), von welchen oder in welche ein oder mehrere der Merkmale jeweils entfernt oder zugewiesen sind; und der Gruppen-Zuweiser zumindest eines aus einem Entfernen jener Merkmale aus der Gruppe, bei welchen der Winkel und die Varianz außerhalb der vorbestimmten Varianz sind, und einem Zuweisen (208) jener Merkmale in die Gruppe, bei welchen der Winkel und die Varianz innerhalb der vorbestimmten Varianz sind, durchführt.

9. System nach Anspruch 7, bei welchem der unbeaufsichtigte Klassifizierer (73) die Gruppen (80) fertigstellt (214), welcher zumindest eines aus einem Zusammenfassen einer Mehrzahl der Gruppen in eine einzelne Gruppe; Aufteilen einer Gruppe in eine Mehrzahl von Gruppen; und Entfernen von Ausreißer-Gruppen enthält.

10. Verfahren (100) zum Identifizieren semantisch bezogener Merkmale (212) in einem geordneten Skala-Raum innerhalb eines multidimensionalen Vektor-Raums, welche eine Mehrzahl von Dokumenten (21) darstellen, welches enthält:
Verarbeiten von Merkmalen durch Extrahieren (122) der Merkmale (173) von der Mehrzahl von Dokumenten (21), und Normalisieren (124) jedes Merkmals (173);
Bestimmen von Häufigkeiten (183) von einem Auftritt für jedes der Merkmale (173) in den Dokumenten (21), und Abbilden (114) der Häufigkeiten eines Auftritts (183) in Vektoren (177) mit einem Vektor (177) für jedes Dokument (21);
Erzeugen (195) von Ähnlichkeits-Messungen zwischen den Häufigkeiten eines Auftritts (183) in jedem Vektor (177), und Ausbilden von Gruppen (80), welche jeweils ein oder mehrere der Merkmale (173) enthalten, welche Ähnlichkeits-Messungen innerhalb einer vorbestimmten Varianz haben;
Ordnen der Merkmale (173) in jedem eindimensionalen Signal (81) durch Verringern einer Ähnlichkeit;
Projizieren (196) von jeder Gruppe (80) auf jedes eindimensionale Signal (81) unter Verwendung von Wavelets und Skalierungs-Koeffizienten; und
rekursives Herleiten (220) der Wavelets und Skalierungs-Koeffizienten von jedem eindimensionalen Signal (81) durch sukzessive Detailpegel durch Verringern der Anzahl von abgetasteten Merkmalen, und Analysieren der Wavelets und Skalierungs-Koeffizienten für die Merkmale von den Dokumenten.

11. Verfahren nach Anspruch 10, welches ferner enthält:
Vorverarbeiten (111) jedes der Dokumente (21) vor einer Merkmals-Extraktion zum Identifizieren und logischen Entfernen von Stopp-Wörtern.

12. Verfahren nach Anspruch 10, welches ferner enthält:
Speichern eines einzelnen Auftretens von jedem Merkmal (173) in normalisierter Form.

13. Verfahren nach Anspruch 10, welches ferner enthält:
Anordnen der Vektoren (177) in eine Dokument-Merkmals-Matrix (170) gemäß dem Dokument (21), von welchem die Merkmale (173) in jedem Vektor (177) extrahiert wurden.

14. Verfahren nach Anspruch 10, welches ferner enthält:
Berechnen einer Distanz-Messung zwischen jeder Häufigkeit eines Auftritts (183) als eine Ähnlichkeits-Messung.

15. Verfahren nach Anspruch 10, welches ferner enthält:
Erzeugen eines Eigenorganisations-Kennfeldes des multidimensionalen Vektor-Raums vor einer Projektion.

16. Verfahren nach Anspruch 10, welches ferner enthält:
Kategorisieren der Gruppen (80), welches enthält:
Bestimmen (203) von einer Varianz für jedes der Merkmale;
Bestimmen (206) eines Winkels in Relation zu einem allgemeinen Ursprung für jede der Gruppen; und
Zuweisen (208) jener Merkmale in die Gruppe, bei welchen der Winkel und die Varianz innerhalb der vorbestimmten Varianz sind.

17. Verfahren nach Anspruch 16, welches ferner enthält:
wiederholtes Kategorisieren (213) der Gruppen (80), welches ferner enthält:
Neubestimmen (203) einer Varianz für jedes der Merkmale;
Neubestimmen (206) des Winkels in Relation zum allgemeinen Ursprung für jene Gruppen, von welchen oder in welche ein oder mehrere der Merkmale jeweils entfernt oder zugewiesen sind; und
Durchführen von zumindest einem aus:
Entfernen jener Merkmale aus der Gruppe, bei welchen der Winkel und die Varianz außerhalb der vorbestimmten Varianz sind; und
Zuweisen (208) jener Merkmale in die Gruppe, bei welchen der Winkel und die Varianz innerhalb der vorbestimmten Varianz sind.

18. Verfahren nach Anspruch 16, welches ferner enthält:
Fertigstellen (214) der Gruppen, welches zumindest eines enthält aus:
Zusammenfassen einer Mehrzahl der Gruppen in eine einzelne Gruppe;
Aufteilen einer Gruppe in eine Mehrzahl von Gruppen; und
Entfernen von Ausreißer-Gruppen.

19. Computerlesbares Speichermedium für eine Vorrichtung, welches einen Kode zum Durchführen des Verfahrens gemäß einem der Ansprüche 10 bis 18 enthält.

## Revendications

1. Système (10) pour identifier des caractéristiques associées sémantiquement (212) dans un espace d'échelle ordonné au sein d'un espace vectoriel multidimensionnel représentant une pluralité de documents, comportant :
un analyseur de caractéristiques (172) traitant initialement (110) des caractéristiques (173), comportant :
un extracteur de caractéristiques (71) extrayant (122) les caractéristiques d'une pluralité de documents (21) et normalisant (124) chaque caractéristique, et
un dispositif de projection de caractéristiques (79) déterminant des fréquences d'occurrence (183) pour chacune des caractéristiques (73) dans les documents (21) et faisant une projection (114) des fréquences d'occurrence (183) dans des vecteurs (177) avec un vecteur (177) pour chaque document (21),
un classifieur non supervisé (73) générant (195) des mesures de similitude entre les fréquences d'occurrence (183) de chaque vecteur (177) et formant des grappes (80) où chacune comporte une ou plusieurs des caractéristiques (173) ayant des mesures de similitude au sein d'un écart prédéterminé,
un transformateur d'espace d'échelle (74) ordonnant les caractéristiques (173) dans chaque signal unidimensionnel (81) en diminuant la similitude et en projetant (196) chaque grappe (80) sur chaque signal unidimensionnel (81) en utilisant des ondelettes et des coefficients d'échelle, et
un identifiant de caractéristiques (75) dérivant de manière récursive (220) les ondelettes et les coefficients d'échelle de chaque signal unidimensionnel (81) via des niveaux successifs de détail en réduisant le nombre de caractéristiques échantillonnées et en analysant les ondelettes et les coefficients de mise à l'échelle pour les caractéristiques des documents.

2. Système selon la revendication 1, comportant en outre :
un préprocesseur prétraitant (111) chacun des documents (21) avant l'extraction de caractéristiques pour identifier et supprimer logiquement des mots vides.

3. Système selon la revendication 1, comportant en outre :
un enregistrement de base de données (130) mémorisant une occurrence unique de chaque caractéristique (173) sous une forme normalisée.

4. Système selon la revendication 1, comportant en outre :
un dispositif de projection de fréquence de caractéristiques (79) agençant les vecteurs (177) dans une matrice de caractéristiques de document (170) conformément au document (21) à partir duquel les caractéristiques (173) de chaque vecteur (177) ont été extraites.

5. Système selon la revendication 1, comportant en outre :
un module de similitude calculant une mesure de distance entre chaque fréquence d'occurrence (183) en tant que mesure de similitude.

6. Système selon la revendication 7, comportant en outre :
un plan à auto-organisation de l'espace vectoriel multidimensionnel formé avant la projection.

7. Système selon la revendication 1, dans lequel le classifieur non supervisé (73) classe les grappes (80) en catégorie, comportant :
un dispositif de détermination d'écart déterminant (203) un écart pour chaque des caractéristiques (173),
un dispositif de détermination d'angle déterminant (206) un angle relatif à une origine commune pour chacune des grappes, et
un dispositif d'attribution de grappe attribuant (208) ces caractéristiques dans la grappe où l'angle et l'écart sont dans l'écart prédéterminé.

8. Système selon la revendication 7, dans lequel le classifieur non supervisé (73) classe en catégorie de manière répétée les grappes (80) et le dispositif de détermination de variance redétermine (203) un écart pour chacune des caractéristiques (173), le dispositif de détermination d'angle redétermine (206) l'angle relatif à l'origine commune pour ces grappes à partir desquelles ou dans lesquelles une ou plusieurs des caractéristiques sont respectivement retirées ou attribuées, et le dispositif d'attribution de grappe exécute au moins une action parmi le retrait de ces caractéristiques de la grappe où l'angle et l'écart sont à l'extérieur de l'écart prédéterminé et l'attribution (208) de ces caractéristiques dans la grappe où l'angle et l'écart sont dans l'écart prédéterminé.

9. Système selon la revendication 7, dans lequel le classifieur non supervisé (73) finalise (214) les grappes (80), comportant au moins une action parmi la fusion d'une pluralité des grappes dans une grappe unique, la division d'une grappe en une pluralité de grappes, et le retrait de grappes déviantes.

10. Procédé (100) pour identifier des caractéristiques associées sémantiquement (212) dans un espace d'échelle ordonné au sein d'un espace ve c-toriel multidimensionnel représentant une pluralité de documents (21), comportant les étapes consistant à :
traiter les caractéristiques en extrayant (122) les caractéristiques (173) de la pluralité de documents (21) et en normalisant (124) chaque caractéristique (173),
déterminer des fréquences (183) d'occurrence pour chacune des caractéristiques (73) dans les documents (21) et faire une projection (114) des fréquences d'occurrence (183) dans des vecteurs (177) avec un vecteur (177) pour chaque document (21),
générer (195) des mesures de similitude entre les fréquences d'occurrence (183) de chaque vecteur (177) et former des grappes (80), chacune comportant une ou plusieurs des caractéristiques (173) ayant des mesures de similitude au sein d'un écart prédéterminé,
ordonner les caractéristiques (173) dans chaque signal unidimensionnel (81) en diminuant la similitude,
projeter (196) chaque grappe (80) sur chaque signal unidimensionnel (81) en utilisant des ondelettes et des coefficients de mise à l'échelle,
dériver de manière récursive (220) les ondelettes et les coefficients de mise à l'échelle de chaque signal unidimensionnel (81) via des niveaux successifs de détail en réduisant le nombre de caractéristiques échantillonnées et en analysant les ondelettes et les coefficients de mise à l'échelle pour les caractéristiques des documents.

11. Procédé selon la revendication 10, comportant en outre l'étape consistant à :
prétraiter (111) chacun des documents (21) avant l'extraction de caractéristiques afin d'identifier et de supprimer logiquement des mots vides.

12. Procédé selon la revendication 10, comportant en outre l'étape consistant à :
mémoriser une occurrence unique de chaque caractéristique (173) sous une forme normalisée.

13. Procédé selon la revendication 10, comportant en outre l'étape consistant à :
agencer les vecteurs (177) dans une matrice de caractéristiques de document (170) conformément au document (21) à partir duquel les caractéristiques (173) de chaque vecteur (177) ont été extraites.

14. Procédé selon la revendication 10, comportant en outre l'étape consistant à :
calculer une mesure de distance entre chaque fréquence d'occurrence (183) en tant que mesure de similitude.

15. Procédé selon la revendication 10, comportant en outre l'étape consistant à :
générer un plan à auto-organisation de l'espace vectoriel multidimensionnel avant la projection.

16. Procédé selon la revendication 10, comportant en outre l'étape consistant à :
classer en catégorie les grappes (80), comportant les étapes consistant à :
déterminer (203) un écart pour chaque des caractéristiques,
déterminer (206) un angle relatif à une origine commune pour chacune des grappes, et
attribuer (208) ces caractéristiques dans la grappe où l'angle et l'écart sont dans l'écart prédéterminé.

17. Procédé selon la revendication 16, comportant en outre l'étape consistant à :
classer en catégorie de manière répétée (213) les grappes (80), comportant en outre les étapes consistant à :
redéterminer (203) un écart pour chacune des caractéristiques (173),
redéterminer (206) l'angle relatif à l'origine commune pour ces grappes à partir desquelles ou dans lesquelles une ou plusieurs des caractéristiques sont respectivement retirées ou attribuées, et
exécuter au moins une des étapes consistant à :
retirer ces caractéristiques de la grappe où l'angle et l'écart sont à l'extérieur de l'écart prédéterminé, et
attribuer (208) ces caractéristiques dans la grappe où l'angle et l'écart sont dans l'écart prédéterminé.

18. Procédé selon la revendication 16, comportant en outre l'étape consistant à :
finaliser (214) les grappes, comportant au moins l'une des étapes consistant à :
fusionner une pluralité des grappes en une grappe unique,
diviser une grappe en une pluralité de grappes, et
supprimer des grappes déviantes.

19. Support de mémorisation lisible par ordinateur pour un dispositif conservant du code pour mettre en oeuvre le procédé conformément à l'une quelconque des revendications 10 à 18.
